**Europäisches Patentamt**

**European Patent Office**

**Office européen des brevets**

(19)

(11) **EP 1 111 418 A2**

(12) # EUROPEAN PATENT APPLICATION

(43) Date of publication:
**27.06.2001 Bulletin 2001/26**

(51) Int Cl.7: **G02B 6/34**

(21) Application number: **00127976.9**

(22) Date of filing: **20.12.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **21.12.1999 JP 36279299**

(71) Applicant: **NEC CORPORATION**
**Tokyo (JP)**

(72) Inventor: **Kato, Hiroyuki**
**Minato-ku, Tokyo (JP)**

(74) Representative: **Glawe, Delfs, Moll & Partner**
**Patentanwälte**
**Postfach 26 01 62**
**80058 München (DE)**

(54) **Arrayed-waveguide grating**

(57) An AWG is provided which realizes high wavelength isolation at low cost. To achieve this, Bragg gratings which produce refractive index modulation of a waveguide are formed at even spacing for each of the respective waveguides of an input/output waveguide (22), being a multi-core port, which demultiplexes wavelength multiplexed light which is input from an input/output waveguide (21), being a single core port, for each of respective wavelength components. The central wavelength of the Bragg grating is adjusted so as to be on the short wavelength side of the side lobe of the wavelength component branched to the respective waveguides.

FIG. 1

## Description

BACKGROUND OF THE INVENTION

Field of the Invention

The present invention relates to an arrayed-waveguide grating, and for example, to an arrayed-waveguide grating suitable for a transmission system using a wavelength multiplexed transmission method.

Description of the Related Art

As one of the light transmission techniques gaining attention as a future long distance and large capacity light transmission system, the wavelength division multiplexed (referred to hereunder as WDM) method where a plurality of light signals having mutually different wavelengths are multiplexed, and are transmitted as a plurality of channels simultaneously using an optical fiber to thereby increase the transmission capacity, is gaining attention. With this WDM method for performing multiplexing and separation of light signals having a plurality of wavelength components, an optical wavelength multiplexer / demultiplexer for multiplexing and demultiplexing light signals of extremely short wavelength spacing, influences communication system performance. As such an optical wavelength multiplexer / demultiplexer, there is the Arrayed-Waveguide Grating (referred to hereunder as AWG) with a planar light wave circuit formed on a planar substrate. As well as being applicable to the optical wavelength multiplexer / demultiplexer in the WDM method, the AWG is also expected to be applicable to optical communication devices such as wavelength routers, and wavelength selection elements for multiple wavelength lasers.

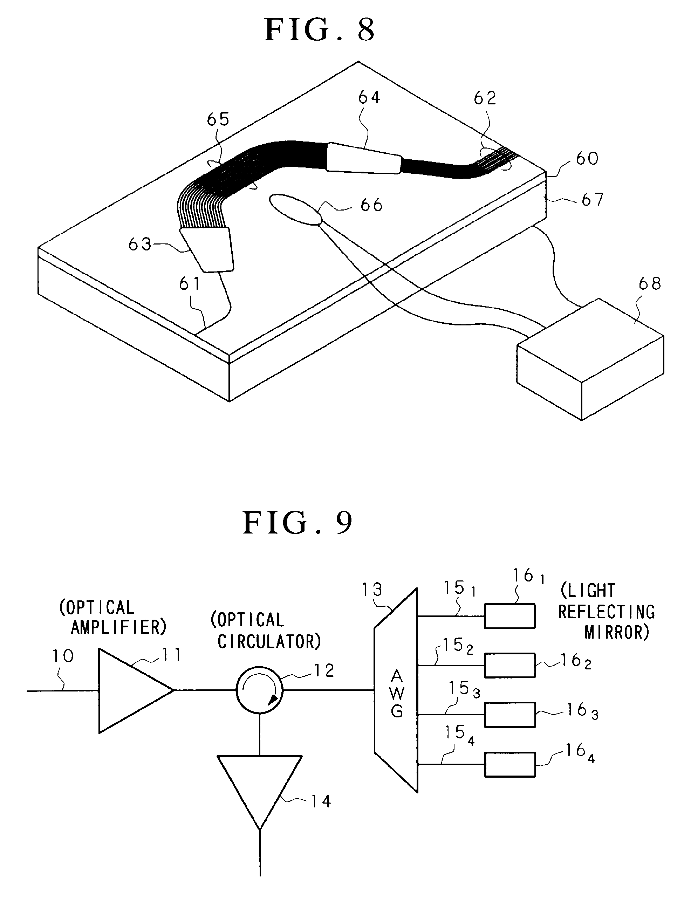

FIG. 9 shows the outline of the configuration of an optical signal relay system to which such an AWG is applied. With this optical signal relay system, a light transmission line 10 along which is transmitted wavelength multiplexed light having mutually different wavelength components, is connected to an optical amplifier 11. An optical circulator 12 is connected to an output terminal of the optical amplifier 11, and an AWG 13 and an optical amplifier 14 are connected to this optical circulator 12. Light transmission lines $15_1$ through $15_4$ are connected to output terminals of the AWG 13, and are terminated by respective light reflecting mirrors $16_1$ through $16_4$. The optical circulator 12 transmits light signals from the optical amplifier 11 in the direction of the AWG 13, and transmits light signals from the AWG 13 in the direction of the optical amplifier 14. The AWG 13 has optical permeability for a narrow band, and performs demultiplexing and multiplexing of high density wavelength multiplexed light signals.

With the optical signal relay system of this configuration, the wavelength multiplexed light transmitted by the light transmission line 10 is amplified by the optical amplifier 11, and input to the AWG 13 via the optical circulator 12. The AWG 13 demultiplexes this wavelength multiplexed light into respective wavelength components of $\lambda_1$ through $\lambda_4$, and outputs these to the respective light transmission lines $15_1$ through $15_4$. At this time, by means of the filter performance due to the optical permeability of the AWG 13, the spontaneous emission optical noise of the optical amplifier 11 and wavelength component light other than $\lambda_1$ through $\lambda_4$ are removed. The wavelength components of $\lambda_1$ through $\lambda_4$ transmitted by the light transmission lines $15_1$ through $15_4$ are reflected by the respective light reflecting mirrors $16_1$ through 164, and are transmitted in the opposite direction along the transmission lines $15_1$ through $15_4$, and again input to the AWG 13. The AWG 13 multiplexes these wavelength component lights of $\lambda_1$ through $\lambda_4$, and output this to the optical circulator 12. The multiplexed light input to the optical circulator 12 is transmitted in the direction of the optical amplifier 14, and is amplified thereby and then output.

The technique related to this AWG is disclosed for example in Japanese Unexamined Patent Application, First Publication No. Hei 11-46030 (Optical Signal Relay Amplifier and Optical Level Adjusting Device).

However, with an optical multiplexer / demultiplexer made up with the AWG as disclosed in Japanese Unexamined Patent Application, First Publication No. Hei 11-46030, there is still a problem in that it is difficult to stably maintain high isolation between the respective waveguides. In order to provide high isolation, cost increase together with low yield cannot be avoided, while in the case where a transmission system is constructed at low cost, a deterioration arises in the transmission characteristics of the wavelength multiplexed light. Consequently, in the case where the transmission system is constructed at low cost, improvement of the transmission characteristics is carried out by attaching an optical filter externally. However, there is a problem in that not only does this invite a size increase of the equipment, but a certain degree of cost increase cannot be avoided, making this unacceptable. Furthermore, with the optical multiplexer / demultiplexer comprising a fiber grating, additional equipment such as a circulator is necessary for each wavelength component. As a result this invites an increase in size and an increase in cost of the equipment.

SUMMARY OF THE INVENTION

Therefore, it is an object of the present invention to provide an AWG which can realize high wavelength isolation at a low cost.

According to a first aspect of the invention, an arrayed-waveguide grating comprises: a first waveguide for transmitting wavelength multiplexed light having mutually different wavelength components; a second waveguide formed with a Bragg grating provided corresponding to the respective wavelength components of the wavelength multiplexed light, for making into a reflection wavelength the short wavelength side of a side lobe of signal light of the respective wavelength components; an arrayed-waveguide comprising a plurality of waveguides which generate mutually different phase differences between respectively transmitted signals; a first slab waveguide for coupling the first waveguide and the respective waveguides of the arrayed-waveguide; and a second slab waveguide for coupling the respective waveguides of the arrayed-waveguide and the second waveguide corresponding to the phase differences generated by the arrayed-waveguide.

That is to say, with the invention according to the first aspect, a Bragg grating which makes into a reflection wavelength, the short wavelength side of the side lobe of the signal light of the respective wavelength components, is formed in the second waveguide, being the multi-core port, of the AWG. Therefore high isolation can be maintained at a low cost.

According to a second aspect of the invention, in the arrayed-waveguide grating according to the first aspect, with the second waveguide, a plurality of Bragg gratings are formed for making into a reflection wavelength, at least the short wavelength side and the long wavelength side of the side lobe of the signal light of the respective wavelength components.

That is to say, according to the second aspect of the invention, since in the second waveguide, being the multi-core port, of the so called AWG, a Bragg grating is formed for making into a reflection wavelength, the short wavelength side and the long wavelength side of the side lobe of the signal light of the respective wavelength components, then the loss due to reflection of the short wavelength side and the long wavelength side of the signal light for each of the respective wavelength components can be made large, and hence even higher wavelength isolation can be maintained.

According to a third aspect of the invention, in the arrayed-waveguide grating according to the second aspect, the first and second waveguides, the arrayed-waveguide and the first and second slab waveguides are quartz waveguides, and germanium is doped at high density into the core of these waveguides, so that the difference in the refractive index between the core and the cladding of the waveguides is relatively large.

That is to say, with the invention according to the third aspect, the AWG is constructed by a quartz waveguide which has been doped with germanium, and a Bragg grating which makes into a reflecting wavelength the short wavelength side and the long wavelength side of the side lobe of the signal light of the respective wavelength components, is formed in the second waveguide, being the multi-core port. Therefore, losses due to the emission mode can be shifted to the short wavelength side to avoid deterioration of the light signal, making it possible to provide an AWG wherein excellent wavelength isolation is maintained at low cost.

According to a fourth aspect of the invention, the arrayed-waveguide grating according to the first aspect further comprises: a temperature detection element for detecting the temperature of a substrate surface on which is formed the first and second waveguides, the arrayed-waveguide and the first and second slab waveguides; a temperature adjusting element for adjusting the temperature of the substrate; and a temperature control unit for controlling the temperature of the substrate by the temperature adjusting element based on detection results of the temperature detection element.

That is to say, according to the fourth aspect of the invention, a temperature detection element and a temperature adjusting element are provided, and the temperature of the substrate on which is formed the respective waveguides constituting the so called AWG is controlled to be constant. Therefore the temperature dependence of the AWG and the Bragg grating is eliminated. Hence even at an optional environmental temperature it is possible to maintain high isolation at a low cost.

According to a fifth aspect of the invention, with the arrayed-waveguide grating according to the first aspect, the second waveguide is formed by a chirped grating.

That is to say, with the invention according to the fifth aspect, a chirped grating is formed in the respective waveguides constituting the multi-core port. Therefore, band width can be increased, and the unnecessary signal component on the short wavelength side or the long wavelength side of the respective wavelength components can be removed to a wide extent. Hence an even higher wavelength isolation can be maintained.

BRIEF DESCRIPTION OF THE DRAWINGS

FIG. 1 is a perspective view showing the external appearance of an AWG according to a first embodiment.

FIG. 2 is a plan view showing a planar configuration of the AWG according to the first embodiment.

FIG. 3 is a plan view showing a Bragg grating formed in the multi-core port in the first embodiment.

FIG. 4 is an explanatory drawing for explaining a theory for improving wavelength isolation by a grating in the first embodiment.

FIG. 5 is a characteristic diagram showing the appearance of wavelength isolation in the case where a Bragg grating is not formed in the respective waveguides.

FIG. 6 is a characteristic diagram showing the appearance of wavelength isolation in the case where a Bragg grating is formed in the respective waveguides.

FIG. 7 is a plan view showing a planar configuration of an AWG according to a second embodiment.

FIG. 8 is a perspective view showing the external appearance of an AWG according to a third embodiment.

FIG. 9 is a configuration diagram showing an outline of the configuration of an optical signal relay system to which a conventional AWG is applied.

## DETAILED DESCRIPTION OF THE PREFERRED EMBODIMENTS

Hereunder is a detailed description of the present invention based on the embodiments.

First Embodiment

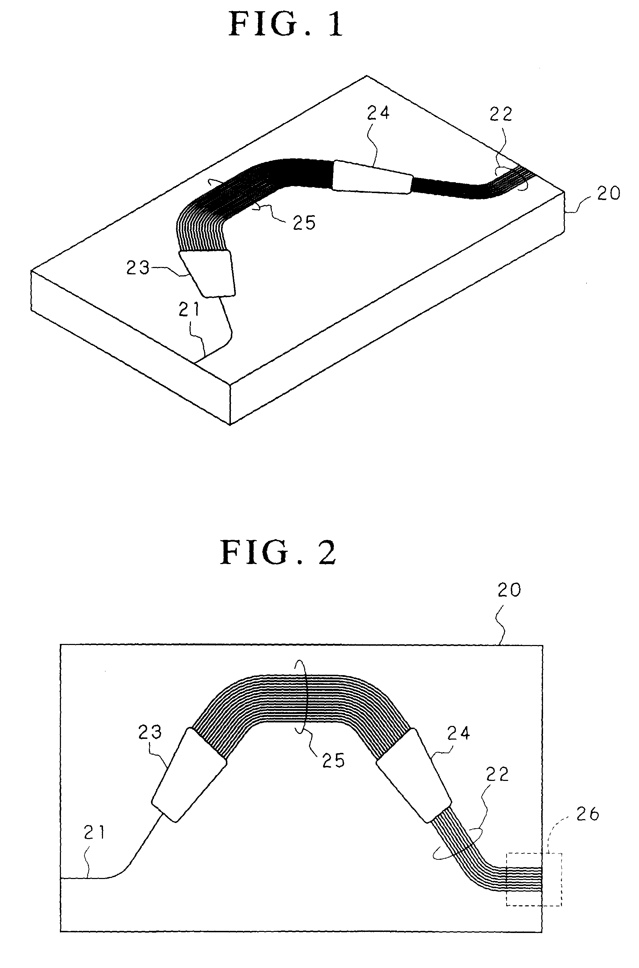

FIG. 1 shows the external appearance of an AWG according to a first embodiment of the present invention. The AWG according to the first embodiment is one where a quartz waveguide layer is formed on a silicon substrate 20, there being formed, input/output waveguides 21 and, 22, first and second slab waveguides 23 and 24, and an arrayed-waveguide 25.

FIG. 2 shows an outline of a planar configuration of the AWG shown in FIG. 1. Here parts the same as for the AWG shown in FIG. 1 are denoted by the same reference symbols. The AWG according to the first embodiment, has a plurality of waveguides with different lengths disposed at even spacing, and due to displacement of the phases between the respective waveguides, dispersibility the same as for a diffraction grating is produced. The first and second slab waveguides 23 and 24 are of segment form with the waveguide end of the respective input/output waveguides 21 and 22 as the center of curvature. By directing the axes of the waveguides towards the center of curvature, a light condensing function can be provided. The input/output waveguide 21 is a single core port, while the input/output waveguide 22 is a multi-core port.

In such an AWG, with the wavelength multiplexed light signals input from the input/output waveguide 21, being the single core port, a phase displacement is produced in the arrayed-waveguide 25 via the first slab waveguide 23, and wavelength component lights from the second slab waveguide 24 demultiplexed into previously determined wavelength components $\lambda_1$ through $\lambda_N$, are respectively output to the respective waveguides of the input/output waveguide 22, being the multi-core port. Furthermore, conversely, with the wavelength component lights of wavelength components $\lambda_1$ through $\lambda_N$ which have been input to the respective waveguides of the input/output waveguide 22, being the multi-core port, wavelength multiplexed light where these wavelength components $\lambda_1$ through $\lambda_N$ are multiplexed, is output from the input/output waveguide 21, being the single core port, via the second slab waveguide 24, the arrayed-waveguide 25 and the first slab waveguide 23. Such an AWG has a signal demultiplexing and multiplexing function. However hereunder the description is given only for the demultiplexing function.

Concerning the characteristic of the AWG according to the first embodiment, for the respective waveguides of the input/output waveguide 22, being the multi-core port, there is the point that in the broken line part 26, Bragg gratings which produce refractive index modulation of the waveguide are formed at even spacing.

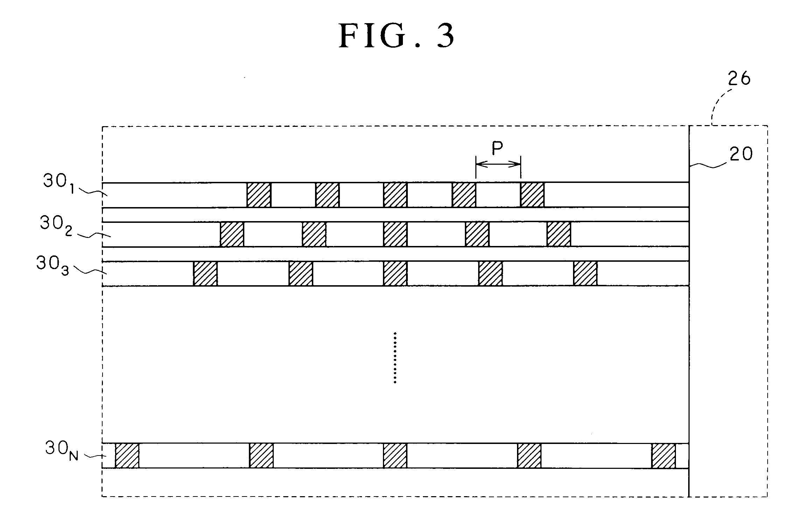

FIG. 3 shows an enlargement of the broken line part 26 of the AWG shown in FIG. 2. The input/output waveguide 25, being the multi-core port, comprises a plurality of waveguides $30_1$ through $30_N$, and a Bragg grating is formed at even spacing for each of the respective waveguides. Here, by forming the respective waveguides with a high refractive index portion and low refractive index portion, a grating is formed. In FIG. 3, the high refractive index portion is shown by the hatched part. Typically, the respective waveguides $30_1$ through $30_N$ transmit wavelength component light of mutually different wavelength components, and the respective Bragg grating spacings are different. With the AWG according to the first embodiment, by forming a Bragg grating for each of the respective waveguides, only a specific wavelength component determined by the grating spacing is reflected.

If the grating spacing is P, and the effective refractive index of the grating is Neff, then the reflection wavelength $\lambda$ r of the Bragg grating can be expressed by the following equation.

$$\lambda r = 2 \times Neff \times P \qquad (1)$$

Furthermore, the central wavelength of the Bragg grating formed by the respective waveguides is adjusted so as to be on the short wavelength side of the side lobe of the wavelength component demultiplexed to the respective waveguides. Consequently, with the wavelength component light of the respective waveguides, the loss becomes sufficiently small on the short wavelength side of the side lobe, enabling the reception sensitivity to be improved. For example, the central wavelength for the Bragg grating is made a wavelength 0.8 [nm] shorter than the wavelength of the wavelength component light of the respective waveguides, and the loss of the respective wavelength signal lights is adjusted to become 0.5 decibels ([dB]) or less.

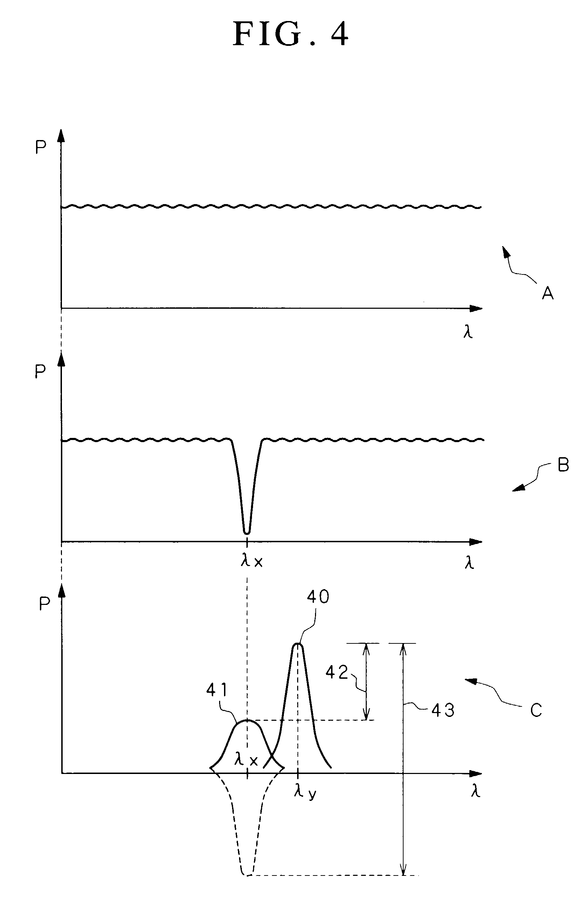

FIG. 4 is a diagram for explaining the theory for improving the reception sensitivity by adjusting the central wavelength of the Bragg grating. In the graphs A and B shown in FIG. 4, the vertical axis shows the optical signal power P, while the horizontal axis shows the wavelength component ([nm]). Here as shown in the graph A in FIG. 4, when wavelength multiplexed light of approximately the same strength over the full range of the wavelength components $\lambda_1$ through $\lambda_N$ is transmitted to a certain waveguide, then in the case where a Bragg grating where the wavelength component $\lambda_x$ according to equation (1) is made into the reflected wavelength, is formed on that waveguide, as shown in the graph B in FIG. 4, only $\lambda_x$ is reflected.

The graph C in FIG. 4 shows the result due to a Bragg grating, in the case where wavelength component light having a wavelength component $\lambda_y$ is transmitted to a certain waveguide. That is to say, as shown in the graph C in FIG. 4, in the case where wavelength component light 40 having a wavelength component $\lambda_y$ is transmitted to a specific waveguide of the input/output waveguides 22, being multi-core ports, of the aforementioned AWG, since high wavelength isolation is not provided, then actually wavelength component light 41 having the wavelength component $\lambda_x$ is also transmitted. Therefore, by forming in this waveguide a Bragg grating which makes the reflection wavelength $\lambda_x$, the wavelength component light 41 having the wavelength component $\lambda_x$ shown in the graph C in FIG. 4, can be removed. Consequently, up to now, it has been necessary to detect the amplitude 42 of the wavelength component light of the wavelength component $\lambda_y$. However since the short wavelength side thereof is removed with the Bragg grating, and the amplitude 43 can be detected on the reception side, reception sensitivity can be considerably improved.

Hereunder is a description of the operation of the AWG according to the first embodiment. Here the wavelength multiplexed light which the transmission line propagates, has wavelength components $\lambda_1$ through $\lambda_8$, and is multiplexed light of wavelength component light with respective spacings of 0.8 [nm].

When the wavelength multiplexed light having wavelength components $\lambda_1$ through $\lambda_8$ is input to the input/output waveguide 21, being the single core port, this is demultiplexed for each wavelength component $\lambda_1$ through $\lambda_8$ by means of the multibeam interference effect due to the occurrence of mutually different phase differences, via the first slab waveguide 23, the arrayed-waveguide 25, and the second slab waveguide 24. The demultiplexed light of these respective waveguide components is coupled in the respective waveguides of the input/output waveguide 22, being the multi-core port, corresponding to each wavelength. With the respective waveguides of the input/output waveguide 22, being the multi-core port, Bragg gratings are formed, and as described for FIG. 3 and FIG. 4, the central wavelength of the respective Bragg gratings, are adjusted so that in the short wavelength side of the wavelength components of the respective demultiplexed lights, the loss of the respective demultiplexed beams becomes sufficiently small. Consequently, the short wavelength side of the respective demultiplexed lights is reflected by the Bragg grating. Hence the situation as heretofore, where sufficient wavelength isolation cannot be maintained so that the short wavelength side of the side lobe of the demultiplexed light is coupled outside of the input/output waveguide 22, being the multi-core port, is avoided.

The reflected wavelength light reflected by the Bragg grating formed in the respective waveguides, is coupled in the input/output waveguide 21, being the single core port, via the second slab waveguide 24, the arrayed-waveguide 25, and the first slab waveguide 23. However, since also at this time the same loss accompanies this, deterioration due to the return loss can be ignored.

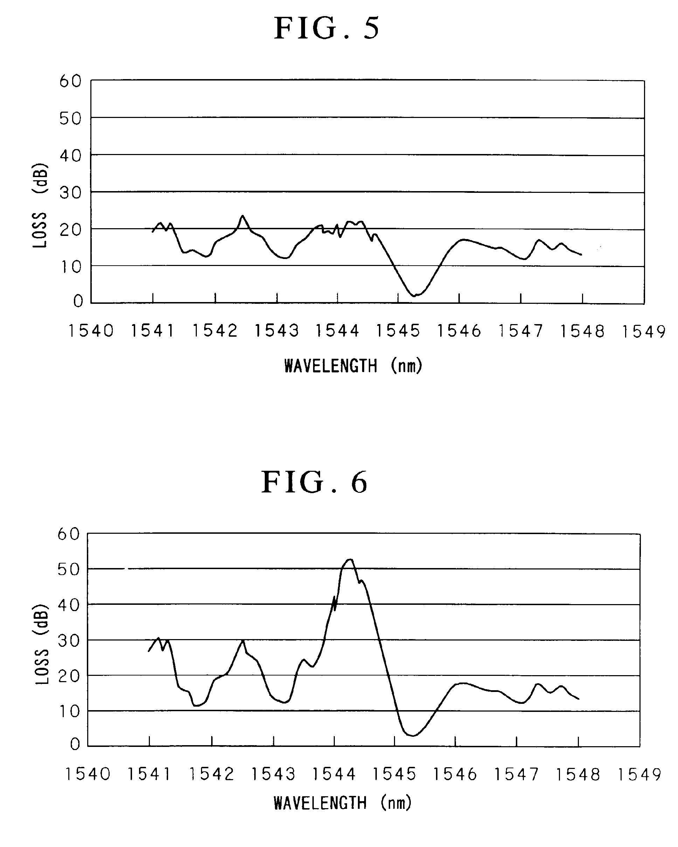

FIG. 5 shows the appearance of wavelength isolation in the case where a Bragg grating is not formed in the respective waveguides. The horizontal axis shows wavelength ([nm]), while the vertical axis shows loss ([dB]). That is to say, this shows that on the 0.8 [nm] short wavelength side of the demultiplexed light in the vicinity of the wavelength component 1545.3 [nm], the loss is around 20 dB.

FIG. 6 shows the appearance of wavelength isolation in the case where a Bragg grating is formed in the respective waveguides. The horizontal axis shows wavelength ([nm]), while the vertical axis shows loss ([dB]). That is to say, this shows that on the 0.8 [nm] short wavelength side of the demultiplexed light in the vicinity of the wavelength component 1545.3 [nm], since this is reflected by the Bragg grating, wavelength isolation of 40 dB or above is maintained.

In this way, with the AWG according to the first embodiment, a Bragg grating where the refractive index modulation of the waveguide is produced at an even spacing is formed for each of the respective waveguides of the input/output waveguide 22, being the multi-core port, which demultiplexes the wavelength multiplexed light sent from the input/output waveguide 21, being the single core port, for each of the respective wavelength components. The central wavelength is adjusted so that this becomes on the short wavelength side of the side lobe of the wavelength component demultiplexed into the respective waveguides. In this way, the isolation of the respective wavelength component lights demultiplexed by the AWG can be improved. Furthermore, formation of the Bragg grating is simple compared to constructing an AWG having a high isolation. Hence an AWG having high isolation can be provided at low cost.

Second Embodiment

With the AWG according to the first embodiment, a Bragg grating having one reflection wavelength for each of the input/output waveguides, being the multi-core port, is formed, so that the loss on the short wavelength side of the side lobe of the wavelength component light which the waveguide transmits is made small. However, the invention is not limited to this. With the AWG according to a second embodiment, two types of Bragg gratings wherein the central wavelengths are different, are formed for each of the input/output waveguides, being the multi-core port. As a result, the loss on the short wavelength side and the long wavelength side of the side lobe of the wavelength component light which the waveguide transmits, is reduced.

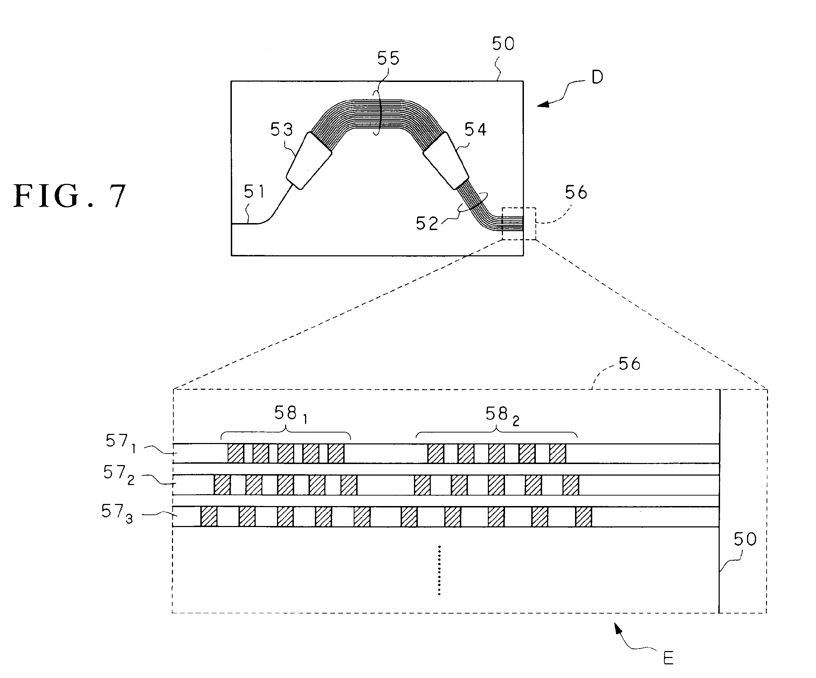

FIG. 7 shows an outline of the configuration of an AWG according to the second embodiment. The symbol D in FIG. 7 shows an outline of a planar configuration of the AWG according to the second embodiment, while the symbol E in FIG. 7 shows an outline of the configuration of a Bragg grating formed in an input/output waveguide, being a multi-core port, of the AWG in the second embodiment. Referring to the symbol D shown in FIG. 7, the AWG according to the second embodiment, as with the first embodiment, involves a quartz waveguide layer formed on a silicon substrate 50, and comprises input/output waveguides 51 and 52, first and second slab waveguides 53 and 54, and an arrayed-waveguide 55. In a portion 56 of the input/output waveguide 52, being the multi-core port, enclosed by the broken line, are formed two types of Bragg grating with different central wavelengths for each of the respective waveguides. That is to say, each of the respective waveguides $57_1$, $57_2$, $57_3$, ... constituting the input/output waveguide 52, being the multi-core port, have Bragg grating parts $58_1$ and $58_2$. The Bragg grating parts $58_1$ and $58_2$ are adjusted so that the respective short wavelength side and the long wavelength side of the side lobe of the wavelength component light sent from the second slab waveguide 54 become reflecting wavelengths. For example, the central wavelength of the Bragg grating is adjusted to "+0.8 [nm]" and "-0.8 [nm]" of the wavelength component light which the respective waveguides transmit, and is adjusted so that the loss of the wavelength component light becomes 0.5 dB or less.

Incidentally, the transmitted light of the Bragg grating is accompanied by a loss due to the emission mode on the short wavelength side of the central wavelength thereof. Consequently, in the case where a Bragg grating is formed which makes into a reflecting wavelength, the long wavelength side of the side lobe of the wavelength component light which appears on the respective waveguides of the input/output waveguide 52, being the multi-core port, of the AWG according to the second embodiment, it is considered that the signal light itself suffers a loss. In this case, by increasing the refractive index of the core of the waveguide and increasing the confinement degree of the light signal, then the loss due to the emission mode can be shifted to the short wavelength side. Therefore with the AWG waveguide according to the second embodiment, the refractive index difference of the core and the cladding can be adjusted to 2 percent.

Normally by doping germanium into the core of the waveguide, the refractive index of the core can be increased. Therefore in an AWG comprising a waveguide having a core doped with germanium at a high density, by forming two Bragg gratings which make into a reflecting wavelength, the short wavelength side and the long wavelength side of the side lobe of the wavelength component light which the waveguide transmits, an AWG having a high wavelength isolation on the short wavelength side and the long wavelength side, can be realized.

Third Embodiment

Since the refractive index of the waveguide formed on the silicon substrate has temperature dependence, the branching wavelength of the AWG and the reflection wavelength of the Bragg grating shift with temperature at a proportion of around 0.01 nm/°C. As a result, the wavelength isolation also depends on temperature. Consequently, also with the AWG according to the first and second embodiments, these depend on temperature, so there is a case where high wavelength isolation cannot be maintained. Therefore, with the AWG according to the third embodiment, a temperature detection element is provided on the silicon substrate, and by means of temperature control using feedback control, it is possible to always have ideal wavelength isolation characteristics irrespective of the surrounding environmental temperature.

FIG. 8 shows the external appearance of an AWG according to the third embodiment. The AWG according to the third embodiment, is one where a quartz waveguide layer is formed on a silicon substrate 60, and there is formed input/output waveguides 61 and 62, first and second slab waveguides 63 and 64, and an arrayed-waveguide 65. The AWG configured with a quartz waveguide layer formed on the substrate 60, is the same as the AWG according to the first and second embodiments. Furthermore, on the substrate 60 is disposed a temperature detecting element 66 such as a thermistor or a thermocouple, so that the temperature of the substrate on which the AWG is formed can be detected. Moreover, on the lower side face of the substrate 60 where the AWG is not formed, is attached a temperature adjusting element 67 such as a Peltier module or an electric heater. The temperature detecting element 66 and the temperature adjusting element 67 are respectively connected to a temperature management unit 68, and the temperature of the substrate 60 is adjusted with the temperature adjusting element 67 so that the detection result of the temperature detecting element 66 remains constant.

With such an AWG according to the third embodiment, the temperature of the front face of the substrate 60 on which the AWG is not formed is detected by the temperature detecting element 66, and the temperature of the front face of the substrate 60 is held constant by the temperature adjusting element 67 attached to the surface of the substrate 60 on which the AWG is not formed, based on the detection results thereof. Therefore the temperature dependence of the AWG and the Bragg grating can be eliminated, so that high isolation can be maintained at a low cost, at an optional environmental temperature.

Here with the AWG according to the first through third embodiments, the description has been for where Bragg gratings are formed on the respective waveguides of the multi-core port. However the invention is not limited to this. For example, the same effect can also be obtained if a chirped grating is formed for enlarging the band width.

With the AWG according to the third embodiment, the description has been for where there is formed two types of Bragg grating which make into reflection wavelengths, the short wavelength side and the long wavelength side of the respective wavelength component lights of the multi-core port. However the invention is not limited to this. For example, by forming three or more types of Bragg grating to remove the other wavelength components, an even higher wavelength isolation can be realized.

## Claims

1. An arrayed-waveguide grating comprising:

   a first waveguide (21) for transmitting wavelength multiplexed light having mutually different wavelength components;
   a second waveguide (22) formed with a Bragg grating provided corresponding to the respective wavelength components of said wavelength multiplexed light, for making into a reflection wavelength the short wavelength side of a side lobe of signal light of the respective wavelength components;
   an arrayed-waveguide (25) comprising a plurality of waveguides which generate mutually different phase differences between respectively transmitted signals;
   a first slab waveguide (23) for coupling said first waveguide and the respective waveguides of said arrayed-waveguide; and
   a second slab waveguide (24) for coupling the respective waveguides of said arrayed-waveguide and said second waveguide corresponding to the phase differences generated by said arrayed-waveguide.

2. An arrayed-waveguide grating according to claim 1, wherein with said second waveguide, a plurality of Bragg gratings are formed for making into a reflection wavelength, at least the short wavelength side and the long wavelength side of the side lobe of the signal light of the respective wavelength components.

3. An arrayed-waveguide grating according to claim 2, wherein said first and second waveguides, said arrayed-waveguide and said first and second slab waveguides are quartz waveguides, and germanium is doped into the core of these waveguides.

4. An arrayed-waveguide grating according to claim 1 further comprising:

   a temperature detection element (66) for detecting the temperature of a substrate surface on which is formed said first and second waveguides, said arrayed-waveguide and said first and second slab waveguides;
   a temperature adjusting element (67) for adjusting the temperature of said substrate; and
   a temperature control unit (68) for controlling the temperature of said substrate by said temperature adjusting element based on detection results of said temperature detection element.

5. An arrayed-waveguide grating according to claim 1, wherein said second waveguide is formed by a chirped grating.

# FIG. 1

# FIG. 2

# FIG. 3

EP 1 111 418 A2

# FIG . 4

# FIG. 5

# FIG. 6

FIG. 7

EP 1 111 418 A2

FIG. 8

FIG. 9

(OPTICAL AMPLIFIER)

(OPTICAL CIRCULATOR)

(LIGHT REFLECTING MIRROR)

A W G